# EUROPÄISCHE PATENTSCHRIFT

(11) **EP 2 936 473 B1**
(45) Veröffentlichungstag und Bekanntmachung des Hinweises auf die Patenterteilung: **22.02.2017**
(21) Anmeldenummer: 13798655.0
(22) Anmeldetag: 29.11.2013
(51) Int. Cl.: G08G 1/16, G08G 1/0969, B60R 1/02

(54) **VORRICHTUNG ZUR ERWEITERTEN DARSTELLUNG EINES UMGEBUNGSBEREICHS EINES FAHRZEUGS**
APPARATUS FOR EXTENDED PRESENTATION OF A SURROUNDING AREA OF A VEHICLE
DISPOSITIF DE REPRÉSENTATION ÉLARGIE D'UNE ZONE DE L'ENVIRONNEMENT D'UN VÉHICULE

(30) Priorität: 18.12.2012 DE 102012223588
(43) Veröffentlichungstag der Anmeldung: 28.10.2015
(73) Patentinhaber: Robert Bosch GmbH, 70442 Stuttgart (DE)
(72) Erfinder: LANGENBERG, Markus, 30559 Hannover (DE)
(86) Internationale Anmeldenummer: PCT/EP2013/075064
(87) Internationale Veröffentlichungsnummer: WO 2014/095304

(56) Entgegenhaltungen:
- WO-A1-2006/037402
- DE-A1-102009 020 300
- US-A1- 2006 164 228

## Beschreibung

### Stand der Technik

Die Erfindung geht aus von einer Vorrichtung zur Darstellung eines Umgebungsbereichs eines Fahrzeugs, mit einem bildgebenden Teil zur bildlichen Wiedergabe des Umgebungsbereichs.

Während der Fahrt auf der Autobahn muss der Fahrer auch den rückwärtigen Verkehr beobachten. Dafür kommen heutzutage in Serienfahrzeugen Rückspiegel (innen und außen am Fahrzeug) zum Einsatz.

Zur Unterstützung bei Parkmanövern kommen zusätzlich vermehrt Rückfahrkameras zum Einsatz. Diese sind in den USA für Neuwagen mittlerweile sogar verpflichtend. Die Rückfahrkamera wird gegenwärtig aber nur bei eingelegtem Rückwärtsgang aktiviert.

Auf Messen und in Studien wird zudem die Möglichkeit betrachtet, die konventionellen Außenspiegel durch eine Kombination von Kamera und Display zu ersetzen. Dies soll zum einen den Luftwiderstand des Fahrzeuges verringern, bietet aber außerdem eine Plattform für weitere Innovationen.

Ebenfalls noch im Forschungsstadium ist der Einsatz von Augmented-Reality-Darstellungen. Dabei wird das reale Bild bzw. ein Videobild einer realen Szene mit künstlichen Objekten angereichert, um dem Fahrer zusätzliche Informationen kontaktanalog zur Verfügung zu stellen.

Um die Querregelung des Fahrzeugs zu überwachen sind auf dem Markt mittlerweile Fahrassistenten verfügbar, die die Fahrbahnmarkierung erfassen und ein Warnsignal ausgeben, wenn diese Überfahren wird. Dazu wird der Abstand zur linken und rechten Fahrbahnmarkierung permanent erfasst.

Die Druckschrift DE 10 2009 020 300 A1, beschreibt ein Verfahren zur Darstellung von automatisch erkannter Umgebung eines Fahrzeugs. Dazu wird eine virtuelle Fahrbahnebene generiert, die von einer Objekterkennungsvorrichtung erkannte Fahrbahnbegrenzungen umfasst. Weiterhin kann die virtuelle Fahrbahnebene zusätzlich erkannte Objekte, wie beispielsweise Personen, die sich auf der Fahrbahn befinden, enthalten. Die virtuelle Fahrbahnebene kann dem Fahrer schließlich beispielsweise mittels eines Head-Up-Displays ausgegeben werden. Die Druckschrift DE 10 2009 045 471 A1, offenbart ein Verfahren zum Anzeigen von Informationen. Dabei ist angegeben, dass Informationen, die in einen Sichtbereich des Fahrers eingeblendet werden sollen, beispielsweise in einem Innen- oder Außenspiegel projiziert werden können. Ebenso sind auch "Augmented Reality"-Displays möglich. In jedem Fall wird gemäß dieser Druckschrift eine Kopfposition des Fahrers berücksichtigt, damit Parallaxen-Verschiebungen zwischen den eingeblendeten Informationen und einer Blickrichtung des Fahrers kompensiert werden können.

Eine Vorrichtung zum Erfassung und Anzeigen von Fahrbahnmarkierungen ist aus der WO 2006/037402 A1 bekannt.

### Offenbarung der Erfindung

### Aufgabe der Erfindung

Die Aufgabe der Erfindung besteht darin, dem Fahrer eine Unterstützung beim Einschätzen von Fahrsituationen zu geben, die über die bildliche Darstellung der realen Umgebung hinaus geht. der Position von Fahrzeugen im Heckbereich des eigenen Fahrzeugs zu geben, wenn sich das eigene Fahrzeug bei Dunkelheit auf einer mehrspurigen Straße befindet.

### Vorteile der Erfindung

Die Erfindung geht aus von einer Vorrichtung zur Darstellung eines

Umgebungsbereichs eines Fahrzeugs, mit einem bildgebenden Teil zur bildlichen Wiedergabe des Umgebungsbereichs. Der Kern der Erfindung besteht darin, dass in die bildlichen Wiedergabe des Umgebungsbereichs zusätzlich Informationen eines Straßenmodells einblendbar sind. Vorteilhaft kann hierdurch, insbesondere bei Dunkelheit oder schlechter Sicht, der schlecht erkennbare Straßenverlauf besser sichtbar gemacht werden. Vorteilhaft lässt sich hierdurch die Position anderer Verkehrsteilnehmer auf oder an der Straße besser einschätzen.

Eine vorteilhafte Ausgestaltung der Erfindung sieht vor, dass die Informationen des Straßenmodells Positionen von Fahrbahnmarkierungen beinhalten. Vorteilhaft lässt sich hierdurch die Position anderer Verkehrsteilnehmer den Fahrspuren zuordnen. Dies ist besonders vorteilhaft bei Gegenverkehr oder bei der Einschätzung des von hinten aufkommenden Verkehrs.

Eine vorteilhafte Ausgestaltung der Erfindung sieht vor, dass die Vorrichtung einen Sensor zur Detektion einer ersten Position von Fahrbahnmarkierungen beinhaltet und dass aus der ersten Position von Fahrbahnmarkierungen eine zweite Position von Fahrbahnmarkierungen im Umgebungsbereich des Fahrzeugs ermittelbar ist und diese zweite Position von Fahrbahnmarkierungen in die bildlichen Wiedergabe des Umgebungsbereichs einblendbar ist. Vorteilhaft lässt sich so auf einfache Weise ein genaues Straßenmodell mit Fahrbahnmarkierungen erstellen, oder auch die Position des Fahrzeugs relativ zum Straßenmodell genau bestimmen. Besonders vorteilhaft ist der Sensor durch einen, insbesondere bereits vorhandenen, Fahrspurassistenten gebildet.

Eine besonders vorteilhafte Ausgestaltung der Erfindung sieht vor, dass die Informationen des Straßenmodells Positionen von Fahrbahnmarkierungen einer mehrspurigen Straße beinhalten. Gerade bei mehrspurigen Straßen ist die Einschätzung der genauen Position von anderen Verkehrsteilnehmern schwierig aber wichtig. Besonders vorteilhaft ist bei der Einschätzung des von hinten aufkommenden Verkehrs die Zuordnung zu einer Fahrspur, sodass besser bewertet werden kann, ob sich der Verkehr von hinten näher oder bereits in einem Überholvorgang auf einer Überholspur begriffen ist.

Eine vorteilhafte Ausgestaltung der Erfindung sieht vor, dass die Vorrichtung zur erweiterten Darstellung eines rückwärtigen Umgebungsbereichs des Fahrzeugs ausgestaltet ist. Vorteilhaft kann hierdurch der schwierig zu beurteilende rückwärtigen Umgebungsbereichs des Fahrzeugs besser dargestellt und somit der rückwärtige Verkehr besser eingeschätzt werden.

Eine vorteilhafte Ausgestaltung der Erfindung sieht vor, dass der bildgebende Teil ein Spiegel, insbesondere ein Rückspiegel, ist. Vorteilhaft wird der Rückspiegel zur erfindungsgemäßen Vorrichtung ergänzt, sodass der rückwärtige Umgebungsbereichs des Fahrzeugs mittels zusätzlich eingeblendeter Informationen (Augmented Reality) über das Straßenmodell aussagekräftiger dargestellt werden kann.

Besonders vorteilhaft ist dabei, dass der Spiegel teildurchlässig ausgestaltet und mit einer rückseitig angeordneten Anzeige zur erweiterten Darstellung versehen ist. Vorteilhaft lässt sich so auf einfache Weise das Spiegelbild des realen rückwärtigen Umgebungsbereichs um Informationen zum Straßenverlauf, insbesondere mit Fahrbahnmarkierungen erweitern. Vorteilhaft lassen sich die dafür benötigten Darstellungsmittel, wie z.B. Projektoren oder Displays, auf der Rückseite des Spiegels anordnen, wo sie zudem vor Umwelteinflüssen geschützt sind.

Eine andere vorteilhafte Ausgestaltung der Erfindung sieht vor, dass der bildgebende Teil eine Kamera mit einem Display ist. Vorteilhaft lässt sich eine Kombination von Kamera mit Display leichter als ein Spiegel mit zusätzlichen Informationen anreichern, weil der Bildschirminhalt des Displays unabhängig von der Position des Betrachters ist, im Gegensatz zu einem Spiegel.

In einer besonders vorteilhaften Ausgestaltung der Erfindung wird mittels der Sensoren eines Spurhalteassistenten die Fahrspur im Frontbereich des Fahrzeugs erfasst und daraus ein Straßenmodell für den Heckbereich des Fahrzeugs errechnet. Anschließend wird dieses Straßenmodell dem Fahrer gezeigt, indem es in einen Rückspiegel des Fahrzeugs eingeblendet wird, oder einem Bild einer Rückfahrkamera überlagert wird. Sollte das Straßenmodell in einen Rückspiegel des Fahrzeugs eingeblendet werden, so ist vorteilhaft sowohl die Spiegelausrichtung als auch die Kopfposition des Fahrers bekannt, um perspektivische Verzerrungen auszugleichen. Durch das Straßenmodell kann der Fahrer jedoch rückwärtigen Verkehr, von dem er bei Dunkelheit meist nur die Scheinwerfer sieht, besser einer Fahrspur der mehrspurigen Fahrbahn zuordnen.

### Zeichnung

Figur 1 zeigt beispielhaft die Darstellung eines Außenspiegels bei Nacht im Stand der Technik.
Figur 2 zeigt eine erfindungsgemäße Vorrichtung zur erweiterten Darstellung eines Umgebungsbereichs eines Fahrzeugs.
Figur 3 zeigt schematisch einen Informationsfluss für die erfindungsgemäße erweiterte Darstellung eines Umgebungsbereichs eines Fahrzeugs mit Informationen eines Straßenmodells.

### Beschreibung von Ausführungsbeispielen

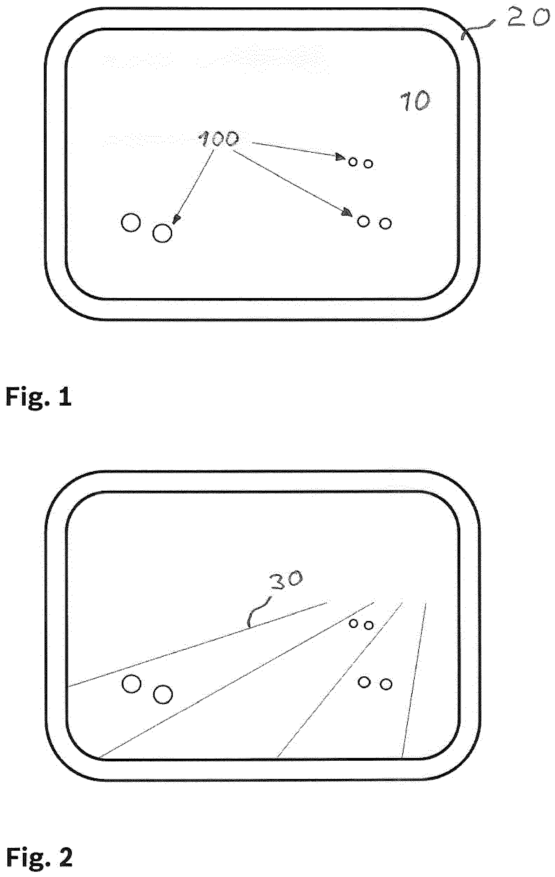

Figur 1 zeigt beispielhaft die Darstellung eines Außenspiegels bei Nacht im Stand der Technik. Dargestellt ist ein bildgebendes Teil 20, welches einen Umgebungsbereich 10 bildlich widergibt. Das bildgebende Teil 20 ist in diesem Fall ein Rückspiegel in Form eines Außenspiegels und der Umgebungsbereich 10 ist der rückwärtige Umgebungsbereiche eines Fahrzeugs, welcher in einer gespiegelten Ansicht wiedergegeben ist. Die bildliche Widergabe enthält reale Bildinformationen 100, wie in diesem Ausführungsbeispiel Scheinwerferpaare nachfolgender Fahrzeuge.

Der Rückspiegel wird beispielsweise in der nachfolgend geschilderten Situation benutzt. Wenn der Fahrer auf der Autobahn oder einer anderen mehrspurigen Straße die Spur wechseln will, so prüft er durch Blick in den Innen- und/oder Außenspiegel sowie einen Schulterblick, ob die Spur frei ist. Tagsüber bei guter Sicht gestaltet sich diese Aufgabe sehr einfach. Bei schlechter Sicht, insbesondere bei Nacht, ist dies jedoch nicht mehr so einfach zu beurteilen. Im Rückspiegel sind nur noch die Frontscheinwerfer eines näher kommenden Fahrzeuges zu erkennen. Es ist jedoch mangels ausreichender Beleuchtung oft nicht mehr möglich zu erkennen, auf welcher Spur sich das näher kommende Fahrzeug bewegt. Beispielhaft dafür ist folgende Situation Auf einer dreispurigen Autobahn fährt das eigene Fahrzeug auf der rechten Spur. Der Fahrer möchte auf die mittlere Spur wechseln. Über den Außenspiegel sieht er ein sich schnell näherndes Fahrzeug hinter ihm. Aufgrund der Dunkelheit kann er aber nicht erkennen, ob sich das Fahrzeug auf der mittleren oder auf der linken Spur befindet. Im zweiten Fall könnte der Spurwechsel gefahrlos erfolgen, im ersten Fall nicht.

Die Erfindung kann dazu beitragen die geschilderte Situation richtig zu bewerten, indem der bildlichen Wiedergabe Informationen über den Fahrspurverlauf, beispielsweise durch lagerichtes Einblenden von symbolischer Fahrbahnmarkierungen, hinzugefügt werden.

Figur 2 zeigt eine erfindungsgemäße Vorrichtung zur erweiterten Darstellung eines Umgebungsbereichs eines Fahrzeugs. Im Unterschied zur Figur 2 sind in die bildlichen Wiedergabe des Umgebungsbereichs 10 zusätzlich Informationen 30 eines Straßenmodells in Form von Fahrbahnmarkierungen eingeblendet. Mit Hilfe der eingeblendeten Zusatzinformation wird dem Betrachter des Spiegels sofort klar, welches Fahrzeug auf welcher Spur mit welchem relativen Abstand nachfolgt. Die Fahrsituation kann, insbesondere hinsichtlich möglicher Überholvorgänge, sicherer eingeschätzt werden.

Zum lagerichtigen Einblenden der Fahrbahnmarkierungen wird ein Straßenmodell herangezogen. Dieses Straßenmodell wird in einem Ausführungsbeispiel von der erfindungsgemäßen Vorrichtung selbst mittels eines Sensors, beispielsweise des Spurhalteassistenten erzeugt. Dazu wird mittels der Messfühler des Spurhalteassistenten die Fahrspur im Frontbereich des Fahrzeugs erfasst und daraus ein Straßenmodell für den Heckbereich des Fahrzeugs errechnet. Anschließend wird dieses Straßenmodell dem Fahrer gezeigt, indem es in einen Rückspiegel des Fahrzeugs eingeblendet wird. In einer alternativen Ausführungsform wird das Straßenmodell dem Bild einer Rückfahrkamera überlagert. Sollte das Straßenmodell in einen Rückspiegel des Fahrzeugs eingeblendet werden, so muss sowohl die Spiegelausrichtung als auch die Kopfposition des Fahrers bekannt sein, um perspektivische Verzerrungen auszugleichen. Durch das Straßenmodell kann der Fahrer jedoch rückwärtigen Verkehr, von dem er bei Dunkelheit meist nur die Scheinwerfer sieht, besser einer Fahrspur der mehrspurigen Fahrbahn zuordnen. Die Erfindung schafft also in den gezeigten Ausführungsbeispielen eine Rekonstruktion sowie eine Darstellung der rückwärtigen Fahrbahnmarkierungen in dem Medium, das für die Sicht nach hinten eingesetzt wird.

Zur Visualisierung der rekonstruierten Fahrbahnmarkierungen können diverse Medien mit unterschiedlichen technischen Herausforderungen zum Einsatz kommen:
Die nahe liegendste aber auch technisch anspruchvollste Realisierung basiert auf einer Erweiterung der realen Spiegel um eine Augmented-Reality-Projektionseinheit. Dazu wird hinter dem Spiegel ein (Laser-)Projektor oder Display installiert, das durch den Spiegel hindurch scheint (ähnlich zu modernen Anzeigen im Taxi). Das Bild, das der Fahrer im Spiegel sieht ist also das reale Spiegelbild sowie die zusätzlichen Elemente, die durch den Spiegel hindurch scheinen und das reale Spiegelbild überlagern. Das für den Fahrer sichtbare reale Spiegelbild hängt ausschließlich von der Position des Spiegels und seiner eigenen Kopfposition ab. Die Neigung des Spiegels ist durch einfache Sensoren ohne Probleme zu erfassen. Die Kopfposition des Fahrers muss ebenfalls erfasst werden. Hierzu kann eine Videokamera zu Einsatz kommen. Ist die Ausrichtung des Spiegels sowie die Kopfposition des Fahrers bekannt, kann die Blickrichtung durch den Spiegel und damit die Projektion der Fahrbahn auf den Spiegel berechnet werden. Die rekonstruierten Fahrbahnmarkierungen können so korrekt im Spiegelbild angeordnet werden.

Deutlich einfacher ist die Realisierung, wenn eine Kombination aus Videokamera und Display verwendet wird. Die Kopfposition des Fahrers hat hier keinen Einfluss, lediglich die Position und Blickrichtung der Kamera ist zu beachten. Diese Parameter sind ohne Probleme zu erfassen. Als Kamera kann (bei geeigneter Ausrichtung) die (möglicherweise bereits vorhandene) Rückfahrkamera genutzt werden. Es kann aber auch eine zusätzliche Kamera am Heck oder an der Seite des Fahrzeuges genutzt werden. Zur Anzeige kann das Zentraldisplay, das frei programmierbare Kombiinstrument oder ein neues Display genutzt werden. Sollten die Außenspiegel in Zukunft durch eine Kamera/Display-Kombination abgelöst werden, bilden diese den idealen Kandidaten für die Darstellung der Erfindung.

Zur korrekten Darstellung der rekonstruierten Fahrbahnmarkierung ist außerdem der Versatz zur eigenen Spur erforderlich. Dieser wird von den bereits verfügbaren Spurverlasserassistenten geliefert. Die optische Erfassung funktioniert bei eingeschaltetem Frontscheinwerfer auf nachts. Zur korrekten Darstellung der rückwärtigen Fahrbahnmarkierungen müssen diese um den Versatz zur eigenen Spur verschoben werden.

Der Abstand zwischen jeweils zwei Fahrbahnmarkierungen wird als konstant angenommen. Aus der Fahrbahnmarkierung der eigenen Fahrspur von oben kann also der Abstand zwischen zwei Spurmarkierungen ermittelt werden. Die eigentliche Rückprojektion der Spurverläufe kann dann auf zwei Arten gewonnen werden:
Zum einen kann die eigene Fahrhistorie herangezogen werden. Mit Hilfe der eigenen Geschwindigkeit, dem Lenkeinschlag und dem momentanem Abstand zur Fahrbahnmarkierung kann der rückwärtig Spurverlauf aufgezeichnet, rekonstruiert und dargestellt werden.

Alternativ oder als Ergänzung kann die Information über den Straßenverlauf aus der Navigation entnommen werden. Dies hat den Vorteil, auch direkt nach einer Autobahnauffahrt zu funktionieren, wenn also der rückwärtig sichtbare Bereich nicht selber gefahren wurde. Als Nachteil ist zu nennen, dass die Kartengenauigkeit bei heuten Kartenmaterial vermutlich nicht ausreichen wird. Eine Kombination aus beiden Verfahren ist also zu favorisieren.

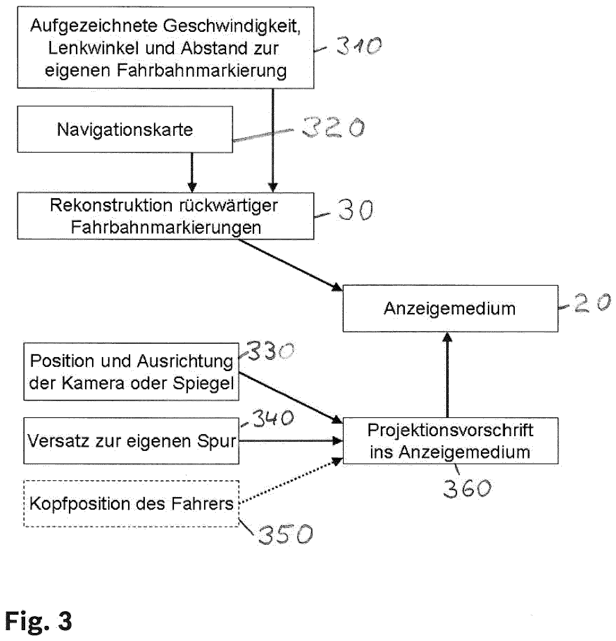

Figur 3 zeigt schematisch einen Informationsfluss für die erfindungsgemäße erweiterte Darstellung eines Umgebungsbereichs eines Fahrzeugs mit Informationen eines Straßenmodells. Bewegungsdaten 310 des Fahrzeugs, wie die aufgezeichnete Geschwindigkeit, der Lenkwinkel und der Abstand zur eigenen Fahrbahnmarkierung oder auch eine Navigationskarte 320 werden zu Informationen 30 über das Straßenmodell, insbesondere zur Rekonstruktion rückwärtiger Fahrbahnmarkierungen verwendet. Diese Fahrbahnmarkierungen werden in das Anzeigemedium, d.h. den bildgebenden Teil 20 eingeblendet. Position und Ausrichtung 330 der Kamera oder des Spiegels, der Versatz 340 zur eigenen Spur, sowie im Fall eines Spiegels die Kopfposition 350 des Fahrers als Betrachter werden zu einer Projektionsvorschrift 360 verarbeitet und ebenfalls dem Anzeigemedium zugeführt.

Das Gesamtsystem, bestehend aus der Rekonstruktion der Spurverläufe sowie der korrekten Positionierung im Anzeigemedium ermöglicht also, die Position von Fahrzeugen des rückwärtigen Verkehrs schnell zu erfassen.

Die Erfindung ist jedoch nicht auf die Anzeige rückwärtiger Fahrbahnmarkierungen beschränkt. Es ist ebenso möglich andere zusätzliche Informationen des Straßenmodells einzublenden, wie beispielsweise über den Straßenzustand, Gefahrenstellen, sich schnell nähernde Fahrzeuge bzw. zurückfallende Fahrzeuge unterschiedlich zu markieren, usw.

## Patentansprüche

1. Vorrichtung zur erweiterten Darstellung eines Umgebungsbereichs (10) eines Fahrzeugs, mit einem bildgebenden Teil (20) zur bildlichen Wiedergabe des Umgebungsbereichs, wobei in die bildlichen Wiedergabe des Umgebungsbereichs (10) zusätzlich Informationen (30) eines Straßenmodells einblendbar sind und wobei die Informationen (30) des Straßenmodells Positionen von Fahrbahnmarkierungen beinhalten, **dadurch gekennzeichnet, dass** die Vorrichtung einen Sensor zur Detektion einer ersten Position von Fahrbahnmarkierungen beinhaltet, wobei der Sensor ein Fahrspurassistent ist, und dass der Fahrspurassistent aus der ersten Position von Fahrbahnmarkierungen eine zweite Position von Fahrbahnmarkierungen im Umgebungsbereich des Fahrzeugs ermittelt, und diese zweite Position von Fahrbahnmarkierungen in die bildlichen Wiedergabe des Umgebungsbereichs (10) einblendet.

2. Vorrichtung zur erweiterten Darstellung eines Umgebungsbereichs (10) eines Fahrzeugs nach einem der vorhergehenden Ansprüche, **dadurch gekennzeichnet, dass** die Informationen (30) des Straßenmodells Positionen von Fahrbahnmarkierungen einer mehrspurigen Straße beinhalten.

3. Vorrichtung zur erweiterten Darstellung eines Umgebungsbereichs (10) eines Fahrzeugs nach einem der vorhergehenden Ansprüche, **dadurch gekennzeichnet, dass** die Vorrichtung zur erweiterten Darstellung eines rückwärtigen Umgebungsbereichs des Fahrzeugs ausgestaltet ist.

4. Vorrichtung zur erweiterten Darstellung eines Umgebungsbereichs eines Fahrzeugs nach einem der vorhergehenden Ansprüche, **dadurch gekennzeichnet, dass** der bildgebende Teil (20) ein Spiegel, insbesondere ein Rückspiegel, ist.

5. Vorrichtung zur erweiterten Darstellung eines Umgebungsbereichs (10) eines Fahrzeugs nach Anspruch 4, **dadurch gekennzeichnet, dass** der Spiegel teildurchlässig ausgestaltet und mit einer rückseitig angeordneten Anzeige zur erweiterten Darstellung versehen ist.

6. Vorrichtung zur erweiterten Darstellung eines Umgebungsbereichs (10) eines Fahrzeugs nach einem der Ansprüche 1 bis 3, **dadurch gekennzeichnet, dass** der bildgebende Teil (20) eine Kamera mit einem Display ist.

## Claims

1. Device for expanded display of a surrounding area (10) of a vehicle, having an imaging component (20) for representing the surrounding area as an image, wherein information (30) of a model of a road can be additionally included in the representation of the surrounding area (10) as an image, and wherein the information (30) of the model of the road includes positions of roadway markings, **characterized in that** the device includes a sensor for detecting a first position of roadway markings, wherein the sensor is a lane assistant, and **in that** the lane assistant determines a second position of roadway markings in the surrounding area of the vehicle from the first position of roadway markings and includes this second position of roadway markings in the representation of the surrounding area (10) as an image.

2. Device for expanded display of a surrounding area (10) of a vehicle according to one of the preceding claims, **characterized in that** the information (30) of the model of the road includes positions of roadway markings of a multi-lane road.

3. Device for expanded display of a surrounding area (10) of a vehicle according to one of the preceding claims, **characterized in that** the device is configured for expanded display of a surrounding area to the rear of the vehicle.

4. Device for expanded display of a surrounding area of a vehicle according to one of the preceding claims, **characterized in that** the imaging part (20) is a mirror, in particular a rear-view mirror.

5. Device for expanded display of a surrounding area (10) of a vehicle according to Claim 4, **characterized in that** the mirror is embodied in a partially translucent fashion and is provided with a display system, arranged at the rear, for expanded display.

6. Device for expanded display of a surrounding area (10) of a vehicle according to one of Claims 1 to 3, **characterized in that** the imaging part (20) is a camera with a display system.

## Revendications

1. Dispositif de représentation étendue d'une zone environnante (10) d'un véhicule, comprenant une partie de restitution d'image (20) destinée à la reproduction figurative de la zone environnante, des informations supplémentaires (30) d'un module de route pouvant être incrustées dans la reproduction figurative de la zone environnante (10) et les informations (30) du modèle de route contenant les positions des marquages de la chaussée, **caractérisé en ce que** le dispositif comprend un capteur destiné à détecter une première position des marquages de la chaussée, le capteur étant un assistant de voie de circulation, et **en ce que** l'assistant de voie de circulation détermine une deuxième position des marquages de la chaussée à partir de la première position des marquages de la chaussée dans la zone environnante du véhicule, et incruste cette deuxième position des marquages de la chaussée dans la reproduction figurative de la zone environnante (10).

2. Dispositif de représentation étendue d'une zone environnante (10) d'un véhicule selon l'une des revendications précédentes, **caractérisé en ce que** les informations (30) du modèle de route contiennent les positions des marquages de la chaussée d'une route à plusieurs voies.

3. Dispositif de représentation étendue d'une zone environnante (10) d'un véhicule selon l'une des revendications précédentes, **caractérisé en ce que** le dispositif est configuré pour une représentation étendue d'une zone environnante vers l'arrière du véhicule.

4. Dispositif de représentation étendue d'une zone environnante d'un véhicule selon l'une des revendications précédentes, **caractérisé en ce que** la partie de restitution d'image (20) est un miroir, notamment un rétroviseur.

5. Dispositif de représentation étendue d'une zone environnante (10) d'un véhicule selon la revendication 4, **caractérisé en ce que** le miroir est réalisé partiellement transparent et est doté d'un afficheur disposé du côté arrière servant à la représentation étendue.

6. Dispositif de représentation étendue d'une zone environnante (10) d'un véhicule selon l'une des revendications 1 à 3, **caractérisé en ce que** la partie de restitution d'image (20) est une caméra munie d'un écran d'affichage.
